Europäisches Patentamt

European Patent Office

Office européen des brevets

(19)

(11) Veröffentlichungsnummer: **0 051 175**
**B1**

(12) # EUROPÄISCHE PATENTSCHRIFT

(45) Veröffentlichungstag der Patentschrift:
**29.08.84**

(21) Anmeldenummer: **81108297.3**

(22) Anmeldetag: **14.10.81**

(51) Int. Cl.³: **A 01 D 55/18**, A 01 G 3/06

(54) **Rasenkantenschneider.**

(30) Priorität: **31.10.80 DE 8029034 U**

(43) Veröffentlichungstag der Anmeldung:
**12.05.82 Patentblatt 82/19**

(45) Bekanntmachung des Hinweises auf die Patenterteilung:
**29.08.84 Patentblatt 84/35**

(84) Benannte Vertragsstaaten:
**AT BE CH DE FR GB IT LI LU NL SE**

(56) Entgegenhaltungen:
**DE - A - 2 730 171**
**DE - U - 6 938 265**
**DE - U - 7 238 972**

**Die Akte enthält technische Angaben, die nach dem Eingang der Anmeldung eingereicht wurden und die nicht in dieser Patentschrift enthalten sind.**

(73) Patentinhaber: **Max Langenstein Feld- und Gartengeräte GmbH & Co., Max-Eyth-Strasse 5, D-7918 Illertissen (DE)**

(72) Erfinder: **Langenstein, Max, Mühlweg 1, D-7918 Illertissen (DE)**

(74) Vertreter: **Fay, Hermann, Dipl.-Phys. Dr., Ensingerstrasse 21 Postfach 1767, D-7900 Ulm (Donau) (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Rasenkantenschneider mit einem auf die Achse eines Antriebsmotors aufgesetzten Schneidkopf mit einer Spule, auf die ein flexibler Schneidfaden aufgewickelt ist, dessen freies Ende zwischen zwei den Wickelraum der Spule bildenden Deckscheiben herausragt, und mit einem außerhalb der Fadenwicklung zwischen den Deckscheiben gehaltenen flexiblen Band, das zu einem endlos in sich geschlossenen Ring ausgebildet und mit einer Öffnung versehen ist, durch das der Schneidfaden mit seinem freien Ende hindurchgeführt ist.

Bei einem aus der DE-A-2 730 171 bekannten Rasenkantenschneider dieser Art ist die Spule ein selbstständiges austauschbares Teil und der das Band bildende Ring mit enger Passung in axialer Richtung so über die Deckscheiben der Spule aufgeschoben, daß er die eine Deckscheibe mit seiner Innenwand umschließt und dadurch radial festliegt, während er der in Aufschubrichtung nachgeordneten Deckscheibe mit seiner einen Stirnseite innenseitig anliegt. An seiner Innenseite ist der Ring mit einer Ringschulter versehen, hinter welcher die beim Aufschieben des Rings auf die Spule vorübergehend verformte Deckscheibe einrastet. Das Schneidfadenende ragt durch einen am Ring vorgesehenen seitlichen Ausschnitt sowie eine am Schneidkopf umfangsseitig angeordnete Lücke hindurch. Der Schneidfaden kann von der Spule abgewickelt werden, in dem er aus der Lücke in axialer Richtung herausgezogen und zur nächsten Lücke geführt wird. Dazu ist die von dem Ring umschlossene Deckscheibe zwar steif, aber elastisch ausgebildet und somit zum Abziehen des Fadens vorübergehend verformbar.

Um beim Aufschieben des Rings auf die Spule ein sicheres Einrasten der einen Deckscheibe hinter der Ringschulter zu gewährleisten, ist die Ringschulter etwa mittig zum Ring angeordnet. Dadurch erhält der Ring jedoch ein Axialspiel, so daß er nach unten aus dem Schneidkopf vorstehen und somit beschädigt werden kann. Im übrigen besteht dann auch die Gefahr, daß der Schneidfaden in dem durch den Ring nicht mehr abgedeckten Bereich der Spule austreten und zwischen dem Ring bzw. der Deckscheibe und dem Schneidkopf verklemmen kann.

Bei dem aus dem DE-U-6 938 265 bekannten Rasenkantenschneider ist das Band als flexibler Streifen ausgebildet, der zwischen den Deckscheiben angeordnet, somit axial gesichert ist und den Wickelraum der Spule nach außen abschließt. Das Band ist jedoch, um zwischen die Deckscheiben eingelegt werden zu können, in Umfangsrichtung der Spule offen und nach außen hin durch einen axialen Kragen gehalten, der von einem Teil der Spule selbst gebildet ist. An seinem freien Ende ist der Kragen mit Lücken versehen, durch die das Fadenende nach Durchtritt durch die im Band vorgesehene Öffnung aus dem Schneidkopf herausragt. Zur Verlängerung des Schneidfadens wird auf das Fadenende eine axiale Zugkomponente ausgeübt, so daß sich unter diesem Zug die den Lücken gegenüber stehende Deckscheibe verformt, bis sie mit ihrem Rand über die Vorsprünge vorsteht und hierdurch den Durchtritt des Fadenendes zwischen den Vorsprüngen einerseits und dem Rand der verformten Scheibe andererseits ermöglicht. Das Fadenende kann dann über den Rand der verformten Scheibe abgezogen werden, bis die jeweils gewünschte Länge des Fadenendes erreicht ist, oder ebenso wieder aufgewickelt werden, wenn nur am Fadenende derart schräg zur Axialrichtung gezogen wird, daß es aus den Lücken austritt. Wird anschließend das Fadenende losgelassen, die axiale Zugkomponente also aufgehoben, so geht die den Vorsprüngen gegenüber liegende Scheibe in ihre Ausgangslage zurück, wobei sich das Fadenende erneut in eine der Lücken einlegt. Bei zu starkem Zug an dem aus dem Schneidkopf hervorstehenden Fadenende kann jedoch das Band aus dem Wickelraum der Spule und aus dem Schneidkopf herausgezogen werden. Das Band wieder in den Schneidkopf einzusetzen, ist umständlich und aufwendig. Wird aber auf das Wiedereinsetzen des einmal aus dem Schneidkopf versehentlich herausgezogenen Bandes überhaupt verzichtet, so ist das aus dem Schneidkopf hervorstehende Ende des Schneidfadens gegen versehentliches Zurückschlüpfen in den Schneidkopf nicht mehr gesichert.

Der Erfindung liegt die Aufgabe zugrunde, einen Rasenkantenschneider der eingangs genannten Art so auszubilden, daß das den Schneidfaden sichernde Band zwischen den Deckscheiben liegt, den Wickelraum vollständig abdeckt und in axialer Richtung festgelegt ist, dabei dennoch leicht an der Spule montiert werden kann und um deren Achse zur Verlängerung bzw. Verkürzung des Schneidfadens ohne weiteres drehbar ist.

Diese Aufgabe wird nach der Erfindung dadurch gelöst, daß das Band auf seiner Innenseite radial und über die gesamte Breite des Bandes in den Wickelraum greifende Vorsprünge aufweist, durch die das Band an den Deckscheiben gehalten ist.

Die in den Wickelraum greifenden Vorsprünge sichern durch Anschlag an den Deckscheiben den Ring in axialer Richtung. Dennoch ermöglichen sie durch die Verformbarkeit des Ringes dessen erstmalige Montage an der Spule. So kann der Ring bei seiner Montage zunächst mit dem größeren Teil seines Umfanges in den Wickelraum ein- und dicht gegen die Fadenwicklung angelegt werden, so daß für den noch außerhalb liegenden Ringteil ein so großes radiales Spiel gegenüber dem Rand der Deckscheibe entsteht, das es erlaubt, den Ring vollständig über den Rand der Deckscheibe hinweg in den Wickelraum einzulegen.

Einfacher noch und im Rahmen der Erfindung daher bevorzugt ist eine Ausbildung des Ringes, die dadurch gekennzeichnet ist, daß die Vorsprünge durch zur Spulenachse parallele Sicken gebildet sind, die im Sinne einer Streckung des Ringumfanges elastisch verformbar sind. Durch eine solche Streckung kann der Ringdurchmesser bei gleichzeitiger Verflachung der Sicken vorübergehend aufgeweitet werden, so daß der Ring über eine der Deckscheiben hinweg in den Wickelraum eingelegt werden kann, in dem der Ring sich aufgrund seiner elastischen Eigenspannungen unter gleichzeitiger Rückbildung der ursprünglichen Sickentiefe wieder verengt, so daß er auch durch Zug am Schneidfaden nicht mehr aus der Spule herausgezogen werden kann. Dabei empfiehlt es sich insbesondere, die Öffnung für den Durchtritt des Schneidfadens in den Bereich eines der Vorsprünge zu legen, so daß die Axialkomponenten des Fadenzuges unmittelbar über diesen Vorsprung gegen die Deckscheibe der Spule abgefangen werden können. Besonders vorteilhaft ist eine Anordnung, bei der die Öffnung für den Durchtritt des Schneidfadens im Sickenboden liegt.

Hinsichtlich der Öffnung für den Durchtritt des Schneidfadens ist nach der Erfindung vorzugsweise vorgesehen, daß die Öffnung als zur Spulenachse paralleles Langloch ausgebildet ist, das sich an beiden Enden bis dicht an den Rand des den Ring bildenden Bandes erstreckt. Der die Öffnung durchsetzende Schneidfaden kann sich dann unabhängig von der Lage des Bandes über praktisch dessen Breite auf die axiale Höhe der den Fadenaustritt aus dem Schneidkopf ermöglichenden Lücken selbst einstellen. Dadurch werden unerwünschte Fadenabwinklungen immer vermieden und es braucht auf die richtige Lage des Bandes bei der Montage des Ringes nicht mehr geachtet zu werden.

Der durch die Erfindung erreichte Fortschritt besteht im Ergebnis darin, daß der Ring selbständig an der Spule gehalten ist, also weder durch Fadenzug versehentlich von der Spule abgezogen werden noch von einer in das Schneidkopfgehäuse noch nicht eingesetzten Spule ohne eigenen äußeren Abschluß des Wickelraumes abfallen kann, und daher in allen Fällen in seiner ein Zurückschlüpfen des Schneidfadens in den Wickelraum der Spule verhindernden Lage an der Spule gesichert ist.

Im folgenden wird die Erfindung an einem in der Zeichnung dargestellten Ausführungsbeispiel näher erläutert; es zeigt

Fig. 1 einen Axialschnitt durch den Schneidkopf eines Rasenkantenschneiders, wobei der Einfachheit halber der Motor des Rasenkantenschneiders und dessen den Motor aufnehmendes Gehäuse nicht dargestellt sind,

Fig. 2 eine Ansicht des Schneidkopfes nach Fig. 1 in Richtung des dort eingetragenen Pfeiles II,

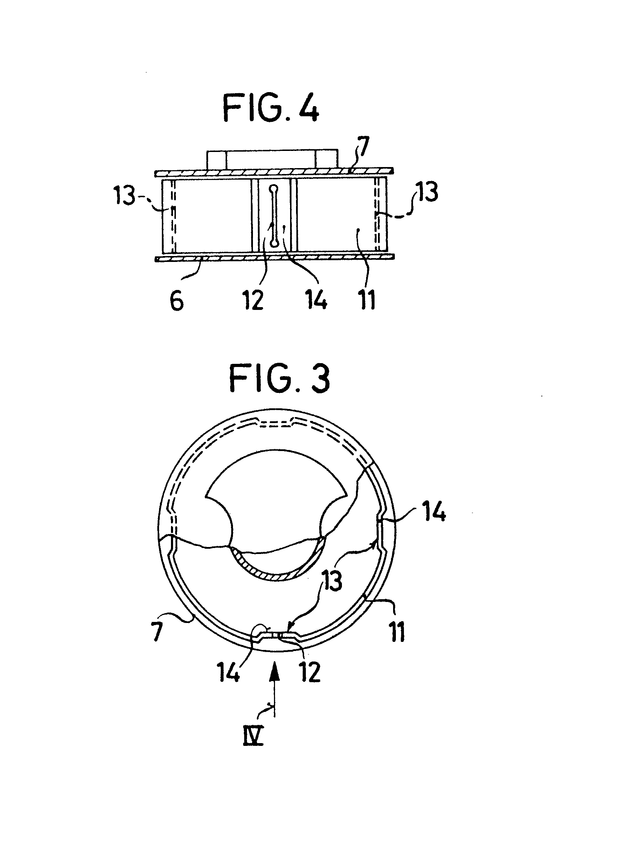

Fig. 3 eine Ansicht der Spule des Schneidkopfes nach den Fig. 1 und 2, teilweise im Schnitt und ohne Schneidfaden,

Fig. 4 eine Ansicht des Gegenstandes der Fig. 3 in Richtung des Pfeiles IV.

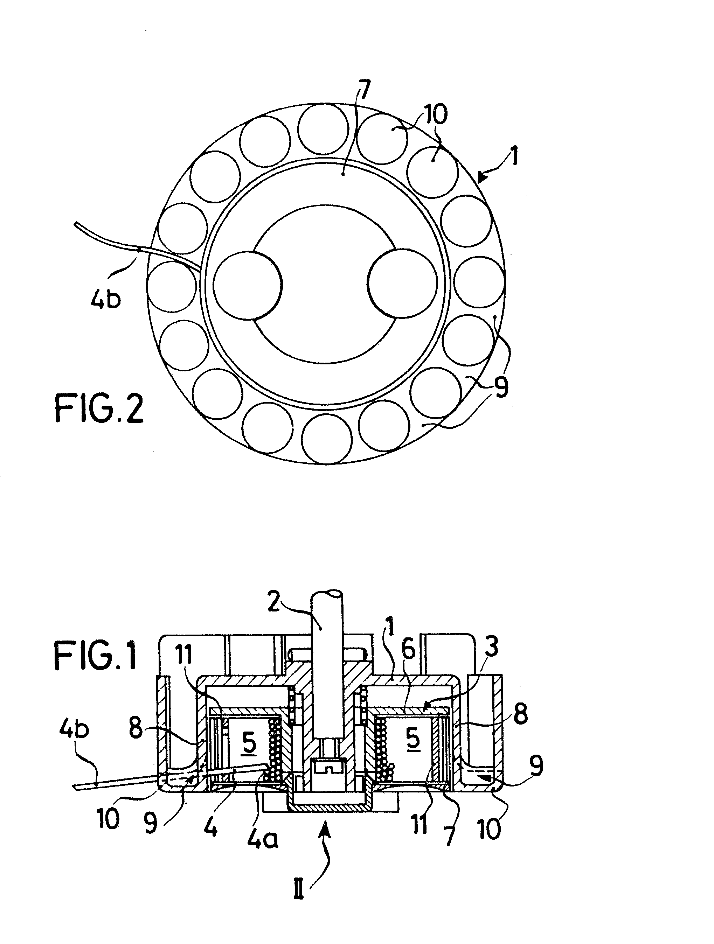

Der in Fig. 1 dargestellte Schneidkopf ist auswechselbar auf die Achse 2 eines Antriebsmotors des im übrigen nicht dargestellten Rasenkantenschneiders verdrehungssicher aufgesetzt. Der Schneidkopf besteht dem grundsätzlichen Aufbau nach aus einem Schneidkopfgehäuse 1 und einer darin eingesetzten Spule 3, von der ein flexibler Schneidfaden 4 aus Kunststoff abgezogen werden kann, wozu die Spule 3 im Schneidkopfgehäuse 1 stufenweise verdrehbar ist, was aber — da ohne Bedeutung für die Erfindung — nicht weiter beschrieben ist. Von dem Schneidfaden 4 ist nur ein Teil der Windungen 4a dargestellt. Das freie Ende 4b des Schneidfadens 4 ragt zwischen zwei den Wickelraum 5 der Spule 3 bildenden Deckscheiben 6, 7 heraus. Der Wickelraum 5 ist radial nach außen von einem axial gerichteten Kragen 8 des Schneidkopfgehäuses 1 abgeschlossen. Im Bereich seines freien Randes ist der Kragen 8 mit über seinen Umfang verteilt angeordneten Lücken versehen, durch die das Schneidfadenende 4b aus dem Schneidkopf austritt. Diese Lücken 9 werden im Ausführungsbeispiel zwischen zylindrischen Vorsprüngen 10 gebildet und sind überall so abgerundet, daß er sich der Wandung des Schneidkopfgehäuses 1 anlegende Schneidfaden 4 dort keine schärfere Abwinklung erfährt. Die Spule 3 besitzt im übrigen ein außerhalb der Fadenwicklung 4a zwischen den Deckscheiben 6, 7 gehaltenes flexibles Band 11, daß mit einer Öffnung 12 versehen ist, durch das der Schneidfaden 4 mit seinem freien Ende 4b hindurchgeführt ist. Das Band 11 ist als ein endlos in sich geschlossener Ring, beispielsweise aus Kunststoff, ausgebildet, der auf seiner Innenseite radial in den Wickelraum 5 greifende Vorsprünge 13 besitzt, durch die er an den Deckscheiben 6, 7 in axialer Spulenrichtung gehalten ist. Die Vorsprünge 13 sind durch zur Spulenachse parallele und sich über die gesamte Breite des Bandes 11 erstreckende Sicken gebildet, die infolge der dem Ringwerkstoff innewohnenden Elastizität im Sinne einer Streckung des Ringumfanges elastisch verformbar sind, so daß der Ring 11 aus seinem — in der Zeichnung dargestellten — spannungsfreien Zustand mit im Vergleich zum Außenrand der Deckscheiben 6, 7 geringfügig kleinerem Durchmesser so weit radial erweitert werden kann, daß er bei seiner Erstmontage mit den Vorsprüngen 13 über eine der Deckscheiben 6, 7 hinweg in den Wickelraum 5 eingelegt werden kann. Die Öffnung 12 für den Durchtritt des Schneidfadens 4 liegt im Sickenboden 14 und ist als zur Spulenachse paralleles Langloch ausgebildet, das sich an beiden Enden bis dicht an den Rand des Bandes 11 erstreckt. Der Schneidfaden 4 kann sich daher selbsttätig über die Länge der Öffnung 12 immer der Höhe der Lücken 9 anpassen, so daß auch das Band keine scharfen Fadenabwinklungen verursachen kann.

**Patentansprüche**

1. Rasenkantenschneider mit einem auf die Achse (2) eines Antriebsmotors aufgesetzten Schneidkopf mit einer Spule (3), auf die ein flexibler Schneidfaden (4) aufgewickelt ist, dessen freies Ende (4b) zwischen zwei den Wickelraum (5) der Spule (3) bildenden Deckscheiben (6, 7) herausragt, und mit einem außerhalb der Fadenwicklung (4a) zwischen den Deckscheiben (6, 7) gehaltenen flexiblen Band (11), das zu einem endlos in sich geschlossenen Ring ausgebildet und mit einer Öffnung (12) versehen ist, durch das der Schneidfaden (4) mit seinem freien Ende (4b) hindurchgeführt ist, dadurch gekennzeichnet, daß das Band (11) auf seiner Innenseite radial und über die gesamte Breite des Bandes (11) in den Wickelraum (5) greifende Vorsprünge (13) aufweist, durch die das Band an den Deckscheiben (7) gehalten ist.

2. Rasenkantenschneider nach Anspruch 1, dadurch gekennzeichnet, daß die Vorsprünge (13) durch zur Spulenachse parallele Sicken gebildet sind, die im Sinne einer Streckung des Ringumfanges elastisch verformbar sind.

3. Rasenkantenschneider nach Anspruch 1 oder 2, dadurch gekennzeichnet, daß die Öffnung (12) für den Durchtritt des Schneidfadens (4) im Bereich eines der Vorsprünge (13) liegt.

4. Rasenkantenschneider nach Anspruch 2, dadurch gekennzeichnet, daß die Öffnung (12) für den Durchtritt des Schneidfadens (4) im Sikkenboden (14) liegt.

5. Rasenkantenschneider nach einem der Ansprüche 1 bis 4, dadurch gekennzeichnet, daß die Öffnung (12) für den Durchtritt des Schneidfadens (4) als zur Spulenachse paralleles Langloch ausgebildet ist, das sich an beiden Enden bis dicht an den Rand des den Ring bildenden Bandes (11) erstreckt.

## Claims

1. A lawn edge trimmer having a cutting head which is fitted onto the shaft (2) of a drive motor, comprising a spool (3) onto which is wound a flexible cutting thread (4), the free end (4b) of which projects out between two cover discs (6, 7) forming the winding chamber (5) of the spool (3), and a flexible strip (11) which is held outside the coil of thread (4a) between the cover discs (6, 7) and which is formed as a ring that is endlessly closed to itself, the strip (11) having an opening (12) through which the cutting thread (4) is passed with its free end (4b), characterised in that the strip (11) has projections (13) which project radially on the inward side thereof and which extend into the chamber (5) over the entire width of the strip ('1) and by means of which the strip is held to the cover discs (7).

2. A lawn edge trimmer according to claim 1 characterised in that the projections (13) are formed by bead portions which are parallel to the axis of the spool and which are elastically deformable in the direction of increasing the circumference of the ring.

3. A lawn edge trimmer according to claim 1 or claim 2 characterised in that the opening (12) for the cutting thread (4) to pass therethrough is disposed in the region of one of the projections (13).

4. A lawn edge trimmer according to claim 2 characterised in that the opening (12) for the cutting thread (4) to pass therethrough is disposed in the bottom (14) of the bead portion.

5. A lawn edge trimmer according to one of claims 1 to 4, characterised in that the opening (12) for the cutting thread (4) to pass therethrough is in the form of a slot which is parallel to the axis of the spool and which extends at both ends to closely adjacent to the edge of the strip (11) forming the ring.

## Revendications

1. Tranche-bordures pour pelouse comprenant une tête de coupe montée sur l'axe (2) d'un moteur d'entraînement et munie d'une bobine (3) sur laquelle est enroulé un fil de coupe flexible (4) dont l'extrémité libre (4b) dépasse entre deux disques de recouvrement (6, 7) qui forment l'espace d'enroulement (5) de la bobine (3), et une bande flexible (11) maintenue entre les disques de recouvrement (6, 7), à l'extérieur de l'enroulement de fil (4a), conformée en bague fermée et munie d'une ouverture (12) par laquelle passe l'extrémité libre (4b) du fil de coupe (4), caractérisé par le fait que la bande (11) présente à sa face intérieure des parties saillantes (13) qui pénètrent radialement et sur toute la largeur de ladite bande (11) dans l'espace d'enroulement (5) et par lesquelles la bande est maintenue sur les disques de recouvrement (7).

2. Tranche-bordures pour pelouse selon la revendication 1, caractérisé par le fait que les parties saillantes (13) sont formées par des moulures parallèles à l'axe de la bobine lesquelles peuvent être déformées élastiquement dans le sens d'un allongement de la circonférence de la bague.

3. Tranche-bordures pour pelouse selon l'une des revendications 1 ou 2, caractérisé par le fait que l'ouverture (12) pour le passage du fil de coupe (4) se situe dans la région de l'une des parties saillantes (13).

4. Tranche-bordures pour pelouse selon la revendication 2, caractérisé par le fait que l'ouverture (12) pour le passage du fil de coupe (4) se situe au fond des moulures (14).

5. Tranche-bordures pour pelouse selon l'une quelconque des revendications 1 à 4, caractérisé par le fait que l'ouverture (12) pour le passage du fil de coupe (4) est conformée en tant que trou oblong parallèle à l'axe de la bobine et qu'elle s'étend aux deux extrémités jusqu'à proximité immédiate du bord de la bande (11) formant la bague.

FIG.2

FIG.1

# FIG. 4

# FIG. 3